# EUROPEAN PATENT SPECIFICATION

(11) **EP 1 118 372 B1**
(45) Date of publication and mention of the grant of the patent: **02.03.2005**
(21) Application number: 99940625.9
(22) Date of filing: 02.09.1999
(51) Int. Cl.: B01D 53/34, F23G 7/06, B01D 53/74

(54) **THERMAL DECOMPOSITION FURNACE FOR EXHAUST GAS**
OFEN ZUR THERMISCHEN ZERSETZUNG VON ABGAS
FOUR DE DECOMPOSITION THERMIQUE POUR GAZ D'EMISSION

(30) Priority: 03.09.1998 JP 28719498; 04.09.1998 JP 28860998
(43) Date of publication of application: 25.07.2001
(73) Proprietor: Kyowa Co., Ltd., Bunkyo-ku, Tokyo 112-0012 (JP)
(72) Inventor: TAKAHASHI, Hiroyuki, Kawagoe-shi, Saitama 350-1176 (JP); TAKAHASHI, Kiyoe, Kawagoe-shi, Saitama 350-1176 (JP)
(74) Representative: Sparing - Röhl - Henseler Patentanwälte
(86) International application number: PCT/JP1999/004762
(87) International publication number: WO 2000/013769

(56) References cited:
- JP-A- 7 012 321
- JP-A- 7 256 056
- JP-A- 8 243 344
- JP-A- 11 082 980
- JP-A- 11 101 426
- US-A- 5 236 672
- US-A- 5 764 850
- PATENT ABSTRACTS OF JAPAN vol. 1998, no. 06, 30 April 1998 (1998-04-30) -& JP 10 036851 A (DAIICHI:KK), 10 February 1998 (1998-02-10)

## Description

### TECHNICAL FIELD

The present invention belongs to thermal decomposition furnaces for heating at high temperatures exhaust gases produced when general wastes such as resin and paper, industrial and medical wastes and crude oils, waste oils and petrochemical substances are burnt to thermally decompose harmful substances which are contained in the exhaust gases to make them harmless.

### BACKGROUND ART

In waste processing facilities and factories, large amounts of various kinds of wastes/crude oils, waste oils and petrochemical substances are incinerated. Exhaust gases and smoke produced at that time contain harmful substances such as soot dust, carbon dioxide, chlorine compounds such as hydrogen chloride, nitrogen compounds such as NOx and dioxin, which affect adversely their environments and human bodies. Thus, the harmful substance contents of the exhaust gas and smoke are controlled globally. Especially, since dioxin has very high toxicity and adversely affects human bodies for a long time, its discharge is strictly controlled.

In general waste processing facilities and factories, incinerators of the type which feeds air to wastes and petrochemical substances and burns them, so-called natural incinerators are used for burning purposes. Such natural incinerators burn wastes and their burning temperatures are low, for example, at 300-500 °C and cannot absolutely avoid production of dioxin.

In order to conform to control of dioxin discharge, the following measures have been taken mainly:
(1) Wastes which produce no dioxin are segregated from those which produce dioxin, and only the wastes which produce no dioxin are burnt;
(2) A device for removing or decomposing dioxin contained in exhaust gases discharged from an incinerator is attached to the incinerator; and
(3) Incinerators are used which burn wastes at high temperatures (of about 800 °C) where dioxin is difficult to produce.

However, there is the problem with the method (1) that a great deal of time and a considerable cost are required for segregating the wastes. Complete segregation is substantially impossible and production of a small amount of dioxin cannot be avoided.

The above method (2) is not satisfactory to cope with dioxin because no inexpensive devices which completely remove or decompose dioxin have been put to practice use at present.

As described above, the exhaust gases contain a plurality of harmful substances. In order to remove or decompose all of them, a plurality of devices which remove or decompose the harmful substances must be attached to the incinerator. Thus, there are the problems that the cost increases and the structure of the incinerator is complicated.

Since the incinerator which burns the wastes at the high temperatures is expensive, the above method (3) has the problem that it is not easy to destroy the conventional incinerator and to build a new incinerator which burns the wastes at the high temperatures.

Thermal decomposition furnaces for exhaust gases, which make use of light emitting heaters containing carbon placed between a pair of electrodes , are known from JP-10-036851 and US-A-5 764 850.

It is therefore an object of the present invention to provide an inexpensive thermal decomposition apparatus which solves the above-mentioned problems with the prior art, and to provide an inexpensive thermal decomposition furnace for an exhaust gas attached to equipment/facilities such as an incinerator which discharges exhaust gases and smoke which contain harmful substances for thermally decomposing the harmful substances to make them harmless.

### DISCLOSURE OF THE INVENTION

In order to achieve the above object, the present invention has the following composition. The present invention is a thermal decomposition furnace for an exhaust gas which thermally decomposes harmful substances contained in the exhaust gas to make them harmless, and comprises a heating chamber for heating the exhaust gas, an inlet port for introducing the exhaust gas into the heating chamber, at least one pair of electrodes provided within the heating chamber, a plurality of light emitting heaters whose main ingredient is carbon and which have impermeability, the plurality of light emitting heaters being provided between the at least one pair of electrodes so as to produce an electric discharge upon application of voltage across the at least one pair of electrodes, and an outlet port for discharging the decomposed exhaust gases out of the heating chamber, wherein the plurality of light emitting heaters are placed in an oxygenless or vacuum state.

In the above arrangement, electric discharges occur between the light emitting heaters. The electric discharge region is at high temperatures, for example, of about 3000 °C, so that a plurality of harmful substances such as carbon dioxide, chlorine compounds, nitrogen compounds and dioxin contained in the exhaust gas are simultaneously decomposed thermally at the high temperatures.

Such exhaust gas thermal decomposition furnaces have a simple structure and can be made inexpensively. By attaching such furnace as a last furnace through which the exhaust gases pass to an existing or new incinerator, the harmful substances contained in the exhaust gases discharged from the incinerator are thermally decomposed and made harmless. Thus, even when the existing incinerator is of the type which produces a large amount of harmful substances, it can be used as it is without newly providing a thermal furnace which produces a less amount of harmful substances to thereby require no high cost.

The plurality of light emitting heaters are placed in an oxygenless state. Thus, the plurality of light emitting heaters are difficult to oxidize, and deteriorate to thereby deform to reduce the discharging efficiency. Thus, the plurality of light emitting heaters are usable for a long time. For example, when the plurality of light emitting heaters each take the form of a sphere, the discharging efficiency is very high. However, when it is oxidized, deteriorated and hence deformed, the discharging efficiency is reduced.

The oxygen concentration concerned is preferably low and there is no problem if it is not higher than the concentration of oxygen contained in air. When the oxygen concentration exceeds the concentration of oxygen contained in air, the plurality of light emitting heaters are liable to be oxidized and deteriorated.

If the plurality of light emitting heaters are placed in a clean environment such as the vacuum state, the discharging efficiency is high and a corresponding high temperature is liable to be obtained. Since high temperature is obtained with small electric power, the operating cost of the decomposing furnace is reduced. In this case, as in the case in which the plurality of light emitting heaters are placed in the oxygenless state, they are difficult to deteriorate and usable for a long time.

A higher vacuum is preferred and a medium vacuum (of not less than 10⁻²Pa and less than 10 Pa) suffices, but a lower vacuum (of not less than 10 Pa and less than the atmospheric pressure) is usable.

Furthermore, a fluid path which extends between the inlet and outlet ports to allow the exhaust gas to pass through the path may be provided within the heating chamber with the plurality of the light emitting heaters being provided within at least a part of the fluid path.

In such arrangement, the exhaust gas comes into direct contact with the plurality of light emitting heaters. Thus, the exhaust gas is heated at high temperatures, for example, of about 3000 °C and almost all harmful substances are completely decomposed thermally.

A heat-resisting pipe which places the inlet and outlet ports in fluid communication for allowing the exhaust gases to pass through the pipe may be provided within the heating chamber with at least a part of the pipe being encircled by the plurality of light emitting heaters.

In such arrangement, the exhaust gas is heated within the heat-resisting pipe and the exhaust gas does not come into contact with the light emitting heaters. Thus, corrosion and deterioration of the plurality of light emitting heaters by the exhaust gas does not occur.

Since the plurality of light emitting heaters are separated from the exhaust gas, they are placed in a highly oxygenless or vacuum state. Thus, the discharging efficiency is high and high temperature is easily obtained. High temperature is also obtained with a small electric power to thereby reduce the operating cost of the decomposition furnace. In addition, the plurality of light emitting heaters are difficult to deteriorate and usable for a long time.

The heat-resisting pipe may be made of a material which contains carbon mainly. In that case, since electric discharges occur also between the heat-resisting pipe and the plurality of light emitting heaters which surround the heat-resisting pipe, the heat-resisting pipe is heated to a high temperature of about 3000 °C. As a result, the exhaust gas is thermally decomposed more efficiently. Carbon pipes are preferably used as the heat-resisting pipes, which preferably have electric conductivity enough to cause electric discharge efficiently.

The plurality of light emitting heaters may be made of at least one of charcoal and graphite. As an example of charcoal, Japanese Bincho charcoal may be cited. Carbon materials such as charcoal and general graphite have many pores open in its surface and contains adsorbed gases within the pores. Thus, there is the problem that it will release the adsorbed gases at high temperatures. Thus, carbon materials such as charcoal and general graphite are required to be processed so as to prevent gas adsorption, for example, by closing the pores.

The plurality of light emitting heaters have impermeability. In that case, since they have reduced absorptivity, there is a reduced probability that they will adsorb harmful substances contained in the exhaust gas or release the adsorbed gas when they are used. Since they are less deteriorated by the harmful substances contained in the exhaust gas or by oxidation, they can be used for a long time. The impermeability of a material implies that its absorptivity is low because the number of pores present in a surface of the material is small and that its specific surface area is small, so that it is difficult to oxidize and corrode by chemicals.

The plurality of light emitting heaters each preferably take the form of a sphere. In order to cause electric discharges efficiently between the plurality of light emitting heaters, the light emitting heaters are preferably in point contact, one with another. If they are in a line- or surface-contact state, a high current would flow to thereby reduce the discharge efficiency. When the plurality of light emitting heaters each take the form of a sphere, they are necessarily placed in a point contact state, electric discharge is performed efficiently to thereby provide high temperature, and to reduce the operating cost of the decomposition furnace. The plurality of light emitting heaters take the form of a perfect sphere more preferably.

The decomposition furnace may comprise a filter made of at least one of active carbon and charcoal for allowing the thermally decomposed exhaust gas to pass therethrough. In that case, even if the decomposed gases contain hydrocarbon, heavy metals or undecomposed harmful substances, the filter will adsorb them to prevent them from being discharged out of the furnace.

### BRIEF DESCRIPTION OF THE DRAWINGS

FIG. 1 is a perspective view of a first embodiment of a thermal composition furnace for exhaust gas according to the present invention.
FIG. 2 is a vertical cross-sectional view of the first embodiment.
FIG. 3 is a horizontal cross-sectional view of the first embodiment.
FIG. 4 is a partly enlarged view of the first embodiment.
FIG. 5 schematically illustrates electric discharge between two light emitting heaters.
FIG. 6 is a perspective view of a modification of the first embodiment.
FIG. 7 is a cross-sectional view of the modification of the first embodiment.
FIG. 8 is a perspective view of a further modification of the first embodiment.
FIG. 9 is a perspective view and a cross-sectional view of a still further modification of the first embodiment.
FIG. 10 is a perspective view of the still further modification of the first embodiment.
FIG. 11 is a perspective view of a second embodiment of the thermal composition furnace for exhaust gas according to the present invention.
FIG. 12 is a horizontal cross-sectional view of the second embodiment.
FIG. 13 is a horizontal cross-sectional view of a third embodiment of the thermal composition furnace for exhaust gas according to the present invention.
FIG. 14 is a horizontal cross-sectional view of a fourth embodiment of the thermal composition furnace for exhaust gas according to the present invention.

### BEST MODE FOR CARRYING OUT THE INVENTION

Embodiments of the thermal decomposition furnace according to the present invention will be described in mote detail with reference to the accompanying drawings. The terms indicating directions such as "up", "down", "front", "rear", "right" and "left" represent respective directions in each of the drawings for convenience of explanation.

It is to be noted that the present invention is not limited to the embodiments described below.

### (First Embodiment)

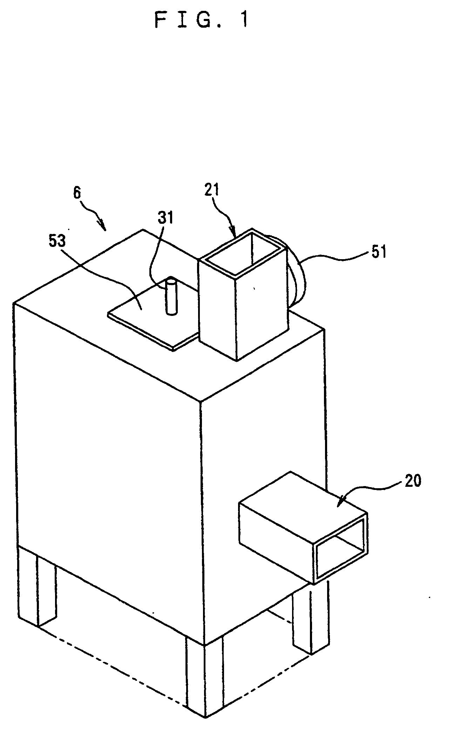

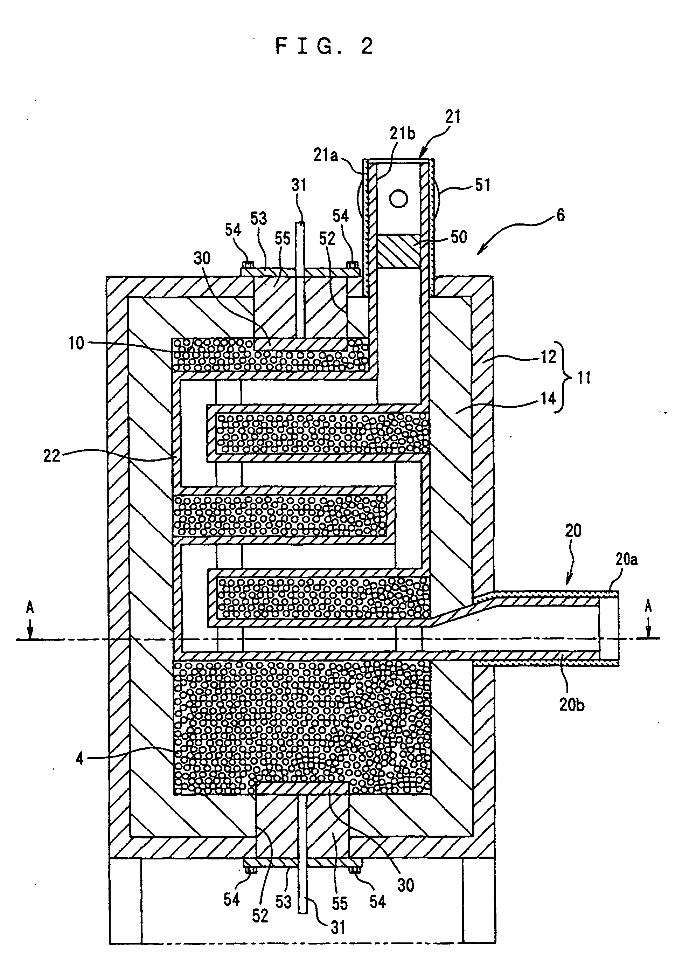

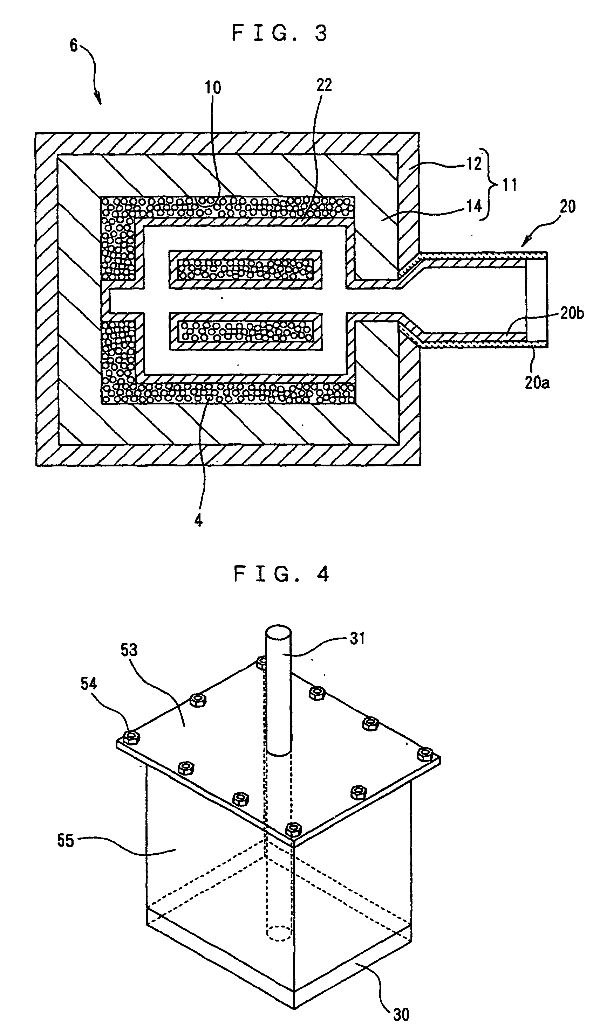

FIG. 1 is a perspective view of a thermal decomposition furnace for exhaust gas in the first embodiment. FIG. 2 is a vertical cross-sectional view of the furnace 1. FIG. 3 is a horizontal cross-sectional view taken along a line A-A of FIG. 2. FIG. 4 is an enlarged view of an opening portion 52 of the furnace 1.

The furnace 1 includes an internal heating chamber 10 with an inlet port 20 on its side through which the exhaust gas is introduced into the heating chamber 10 and an outlet port 21 on its top through which the resulting decomposed exhaust gases are discharged from the heating chamber 10. The inlet port 20 has a double pipe structure which includes an outer ceramic pipe 20a and inner carbon pipe 20b. Similarly, the outlet port 21 has a double pipe structure which includes an outer ceramic pipe 21a and inner carbon pipe 21b.

The furnace 1 has an outer wall 11 of a double layer structure which includes an outer iron plate layer 12 coated with a heat resisting material and an inner heat-resisting firebrick layer 14. As will be described later, the heating chamber 10 is heated to a high temperature, for example, of about 3000 °C, but is in an oxygenless or vacuum state, so that heat conduction is hardly performed and hence such a simple structure will suffice for the outer wall 11.

The inner rectangular parallelepiped space surrounded by the firebrick layer 14 forms the airtight heating chamber 10, where the exhaust gas introduced through the inlet port 20 is heated and thermally decomposed, and the resulting gases are discharged from the outlet port 21. Joints of the firebrick 14 layer each are filled with a monolithic refractory such as refractory concrete (not shown) to thereby improve the airtightness of the heating chamber 10.

The heating chamber 10 has therein a heat-resisting carbon pipe 22 extending between the inlet port 20 and the outlet port 21. As long as the heat-resisting pipe 22 resists a high temperature, for example, of about 3000 °C, it may be made of a material such as alumina. Depending on the material used, the heat-resisting pipe 22 may have a doubled structure to improve the heat-resistance and strength thereof.

The heat-resisting pipe 22 comprises a plurality of horizontal path portions and a plurality of vertical path portions extending along the side of the heating chamber 10 which are combined alternately to form a zigzag vertical path. Each horizontal path portion has a structure which separates halfway into a plurality of subpaths (three in FIG. 3) which then merge into one. That is, the heat-resisting pipe 22 extends while repeating separation, merging and zigzagging. The heating chamber 10 is filled with a plurality of light emitting heaters 40 each in the form of a graphite sphere (having a diameter of 30-50 mm) which encircle the heat-resisting pipe 22, excluding the inside of the heat-resisting pipe 22. Since the plurality of light emitting heaters 40 each take the form of a sphere, adjacent ones of them are in point contact, one with another. They are also in point contact with the heat-resisting pipe 22. The composition of the heaters 40 and a method of making them will be described in detail later.

A pair of plate-like carbon electrodes 30 are each disposed on a respective one of upper and lower surfaces of the heating chamber 10 such that the plurality of light emitting heaters 40 are disposed between the pair of carbon electrodes 30 from which a corresponding pair of carbon rods 31 outwards extend respectively through the upper and lower outer walls 11 of the furnace 1. Each carbon rods 31 may be replaced with a heat-resisting fireproof stainless steel one. It is to be noted that when the furnace 1 has a structure in which the pair of stainless steel rods extend through the corresponding pair of carbon electrodes 30 to come into contact with the plurality of light emitting heaters 40, the portions of the pair of stainless steel rods which come into contact with the plurality of light emitting heaters 40 should be covered by a carbon material to prevent a deterioration therein.

A fiber-like active carbon filter 50 is provided between the heating chamber 10 and the outlet port 21. The active carbon has on its surface innumerable open pores which include micro ones having a diameter of not more than 20 Å, medium ones having a diameter of more than 20 Å and less than 1000 Å, and macro ones having a diameter of not less than 1000 Å, and has a specific surface area of 500-1700 m²/g. Thus, the active carbon has strong absorptivity to selectively adsorb relatively large molecules physically. Instead of the fiber-like active carbon filter 50, particulate active carbon may be used.

A blower 51 is provided within the outlet port 21 to draw the exhaust gas from the inlet port 20 into the heating chamber 10. The blower 51 may be replaced with a vacuum pump.

A pair of openings 52 each are provided outside a respective one of the pair of carbon electrodes 30 through a corresponding one of the upper and lower surfaces of the furnace 1 so that inspection/maintenance of the inside of the furnace 1 (including inspection of a deterioration in the quality of the light emitting heaters 40, carbon electrode 30 and heat-resisting firebrick layer 14, replacement of the light emitting heaters 40, and carbon electrode 30 with corresponding respective new ones, etc.). Each opening 52 is covered with an iron cover 53, which is removably fixed by volts 54 to the outer wall 11. A refractory sealing sheet (not shown) is provided between each cover 53 and a respective one of the top and bottom of the outer iron plate layer 12 of the outer wall 11 to provide satisfactory inside airtightness of the furnace 1. A refractory concrete block 55 is filled between each carbon electrode 30 and a corresponding cover 53 to provide satisfactory maintenance of the temperature within the furnace 1. The refractory concrete block 55 may be replaced with a heat-resisting firebrick.

A method for thermally decomposing harmful substances contained in the exhaust gas, using the furnace 1, will be described next.

The heating chamber 10 is in fluid communication with a vacuum pump (not shown) and hence placed in a vacuum state (6.7 x 10⁻² Pa). Thus, the plurality of light emitting heaters 40 filled in place within the heating chamber 10 are also in the vacuum state.

The pair of carbon rod 31 are connected to a power supply (not shown). When the pair of carbon electrodes 30 are impressed with a voltage of about 200 V, electric discharges occur among all the light emitting heaters 40 within the heating chamber 10.

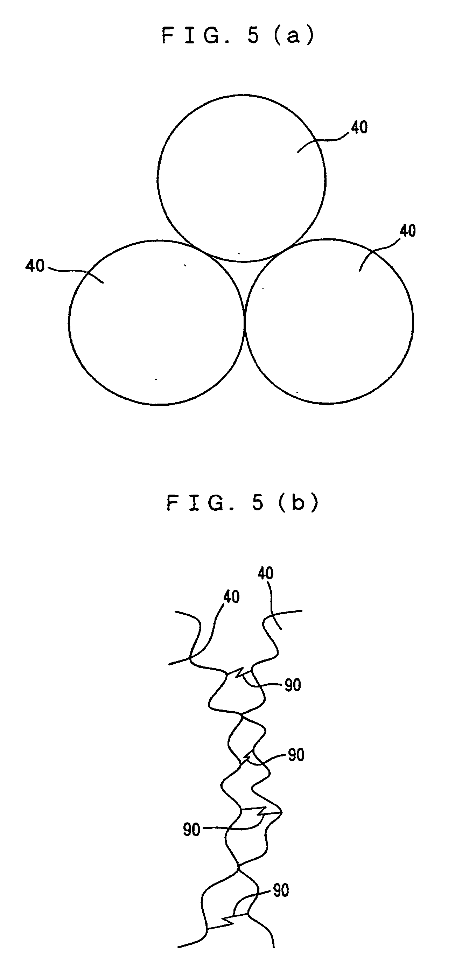

The mechanism of occurrence of the electric discharges will be described with reference to FIG. 5. FIG. 5 (a) shows three light emitting heaters 40 placed in contact, one with another. FIG. 5 (b) illustrates the contacting portions of any two of the elements 40 in an enlarged view.

Since the plurality of light emitting heaters 40 each take the form of a sphere, any adjacent ones thereof are in point contact with each other. Each heater 40 has a rugged surface microscopically. Thus, any adjacent heaters 40 have microscopical convexities in contact with each other and concavities between the convexities on this surfaces. When a voltage is applied across the adjacent heaters 40, electric currents flow through points at which any two heaters 40 are in contact with each other. However, the areas of the contact points are small and large currents cannot flow through the contact points, and electric charges 90 occur across the concavities in the surfaces of the adjacent heaters. When the heaters 40 are in line/surface contact, one with another, to thereby provide large contact areas, large currents would flow through the areas and the discharge efficiency is reduced.

Electric discharges occur also between the heaters 40 and the heat resisting pipe 22.

If electric discharges occur also in a stabilized manner, a low voltage of about 30 V (a related current is 300-400 A) will suffice for the voltage to be applied.

Light emission will occur along with the electric discharge. It is considered to be effective for accelerating the thermal decomposition of harmful substances. Especially, in thermal decomposition of dioxin, the effect of accelerating the thermal decomposition is considered to be high.

The electric discharges are performed at about 3000 °C and the heating chamber 10 is heated to a high temperature of about 3000 °C in a short time of scores of seconds after application of the voltage across the electrodes. Since electric discharges also occur between the plurality of light emitting heaters 40 and the heat resisting pipe 22, the heat resisting pipe 22 is heated to a high temperature of about 3000 °C. Thus, the exhaust gas introduced into the heat resisting pipe 22 is heated to a high temperature exceeding 2000 °C. When no electric discharges occur between the heaters 40 and the heat resisting pipe 22, the exhaust gas within the pipe 22 is at 1600-2000 °C. At this time, the outer wall 11 (outer iron plate layer 12) of the furnace 1 is substantially at room temperature. Since the resulting temperature is adjustable depending on the applied voltage, the applied voltage may be changed as requested.

When a chimney (not shown) for an incinerator is connected to the inlet port 20, the exhaust gas discharged from the incinerator is introduced into the heat resisting pipe 22. Since the blower 51 draws the exhaust gas within the pipe 22, the exhaust gas neither flows in the reverse direction nor stays within the pipe 22. Since the exhaust gas introduced into the pipe 22 is exposed to a high temperature exceeding 2000 °C, the soot dust, carbon dioxide, chlorine compounds, nitrogen compounds and dioxin contained in the exhaust gas are thermally decomposed to be harmless gases without being burnt.

The decomposed gases can contain harmless low molecular weight substances as well as hydrocarbon and heavy metals, and are adsorbed by the active carbon filter 50. Thus, they are not discharged out of the outlet port 21 of the furnace 1. A very small amount of harmful substances can remain, but is adsorbed by the filter 50. Thus, no such gas is discharged out of the outlet port 21 of the furnace 1.

The filter 50 is restored repeatedly with water vapor of 120-200 °C sprayed thereagainst. Thus, this filter is excellent both in economy and prevention of secondary pollution. When a proportion of heavy metals adsorbed by the filter 50 increases, the heavy metals and other materials can be removed from the filter 50, crushed to pieces with an industrial mill and sifted according to specific gravity to collect the heavy metals.

As long as the object of the present invention is achieved, the positions of the inlet port 20, outlet port 21, and blower 51 in the furnace 1 are not limited to those of the present embodiment. For example, while the blower 51 is illustrated as being attached within the outlet port 21 in the present embodiment, it may be provided between the inlet port 20 and the incinerator which discharges the exhaust gas.

When a large amount of exhaust gas is discharged from the incinerator, a plurality of exhaust gas decomposition furnaces 1 may be attached to the incinerator. In that case, adapters which connect the chimney for the incinerator to the inlet ports 20 for the plurality of the thermal decomposition furnaces 1 are used to separate the exhaust gases from the incinerator and to feed them to the respective thermal decomposition furnaces 1.

While in the embodiment the zigzagging heat resisting pipe is used to obtain sufficient time for heating the exhaust gas, the form of the heat resisting pipe 22 may be designed freely depending on the types and concentrations of harmful substances contained in the waste gas and the quantity of the exhaust gas to be decomposed. For example, it may take the form of a straight line. While in the embodiment the heat resisting pipe 22 is illustrated as extending vertically, it may extend horizontally, of course. In that case, the number of light emitting heaters 40 to be used and electric power consumption are reduced, advantageously.

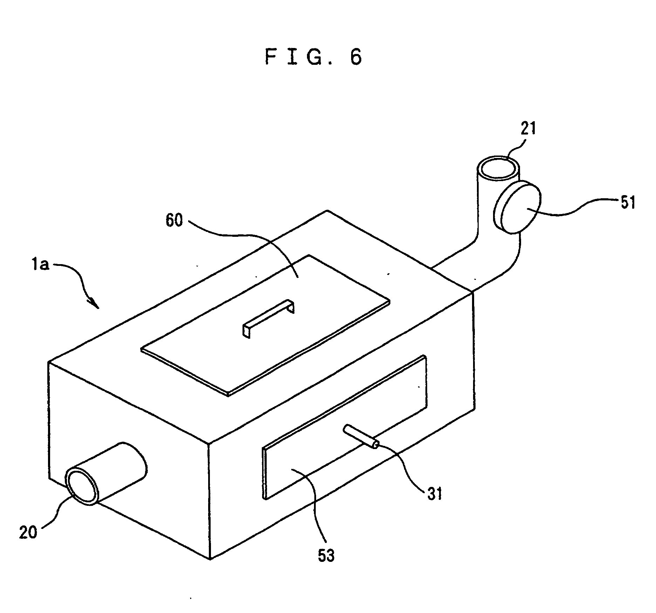

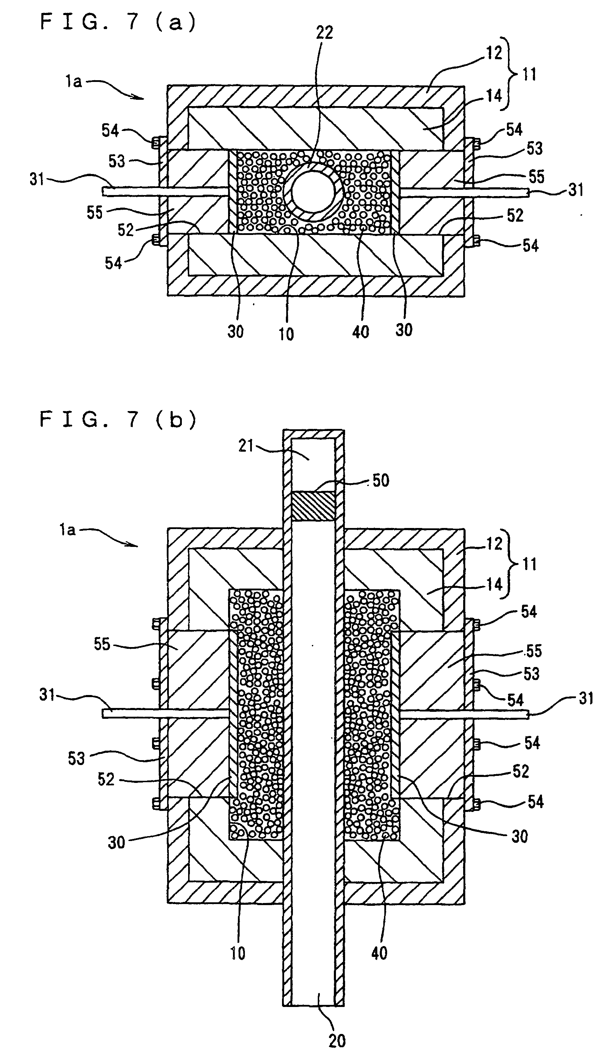

For example, a modification of the first embodiment may take the form of FIGS. 6 and 7. FIG. 6 is a perspective view of a thermal decomposition furnace 1a for exhaust gas as the modification. FIGS. 7(a) and (b) are vertical and horizontal cross-sectional views, respectively, of the thermal decomposition furnace 1a.

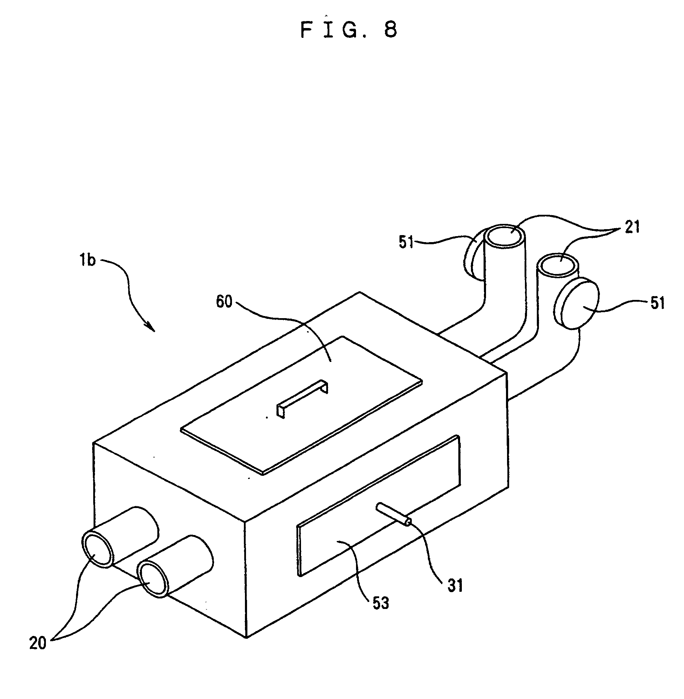

In this modification, the heat resisting pipe 22 take the form of a horizontally extending straight line. In this case, as shown in FIG. 8, a single thermal decomposition furnace for exhaust gas may have a plurality of heat resisting pipes 22, inlet ports 20 with outlet ports 21 to thereby provide a compact structure and a high exhaust gas decomposition efficiency.

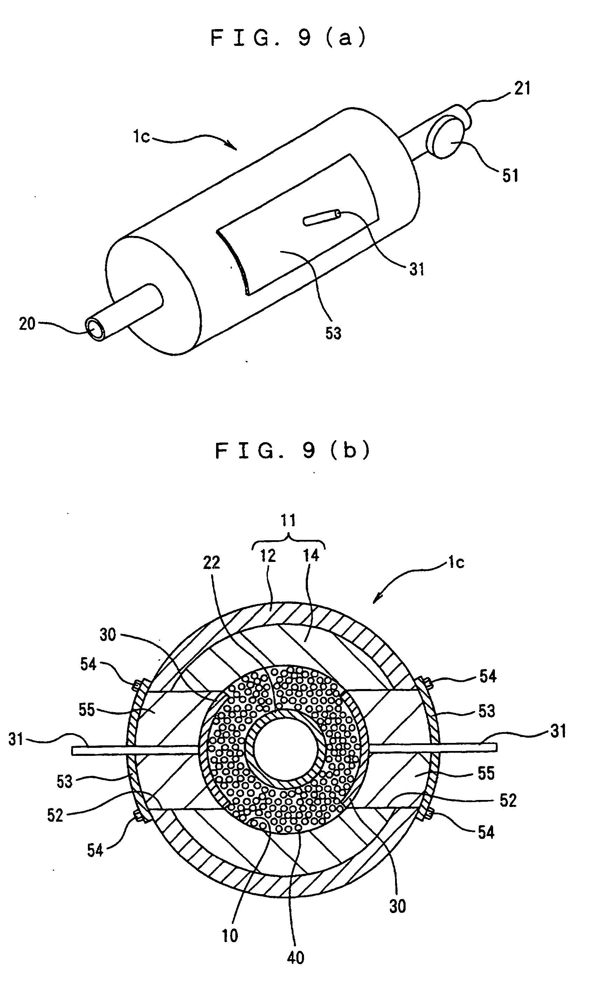

Another modification of the furnace is shown by reference numeral 1c in FIG. 9. FIG. 9 (a) and (b) are perspective and vertical cross-sectional views, respectively, of the furnace 1c.

In this modification, the heat resisting pipe 22 take the form of a horizontally extending straight line, the thermal decomposition furnace 1c takes the form of a cylinder, and the plurality of light emitting heaters 40 uniformly surround the heat resisting pipe 22.

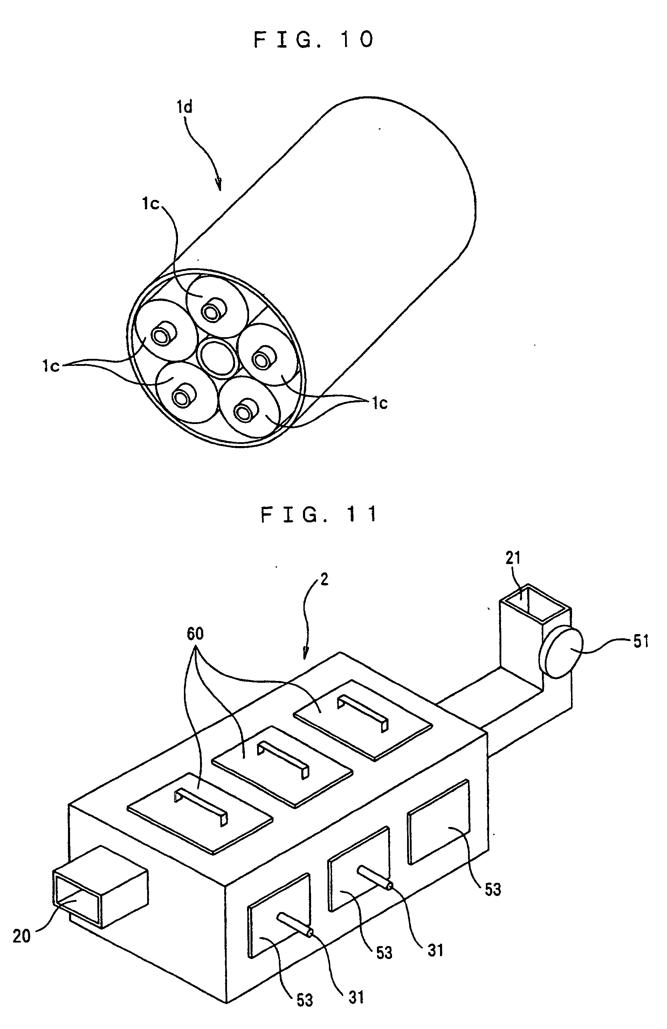

Thus, as shown in FIG. 10, a plurality of (5 in FIG. 10) thermal decomposition furnaces 1c can be enclosed as a unit within a large hollow cylinder and then attached to an incinerator. Such united resulting thermal decomposition furnace 1d for exhaust gas has a high decomposition efficiency and a compact structure. A central pipe shown within the furnace 1d of FIG. 10 is for guiding a lump of wires which feed electric power to the respective decomposition furnaces 1c.

Inspection openings 60 are provided on an upper surface of each of the decomposition furnaces 1a, 1b and 1c of those modifications to inspect a degrees of deterioration in the quality of each of the plurality of light emitting heaters 40 and refractory firebrick layer 14 therein and to replace the plurality of light emitting heaters 40 with a new plurality of ones. In the case of the decomposition furnace 1c, an opening 52 also functions as an inspection opening 60 as in the decomposition furnace 1.

In FIGS. 6-10, the same reference numeral as that used in FIGS. 1-5 is used to denote the same element as, or an element corresponding to, that of the first embodiment.

### (Second Embodiment)

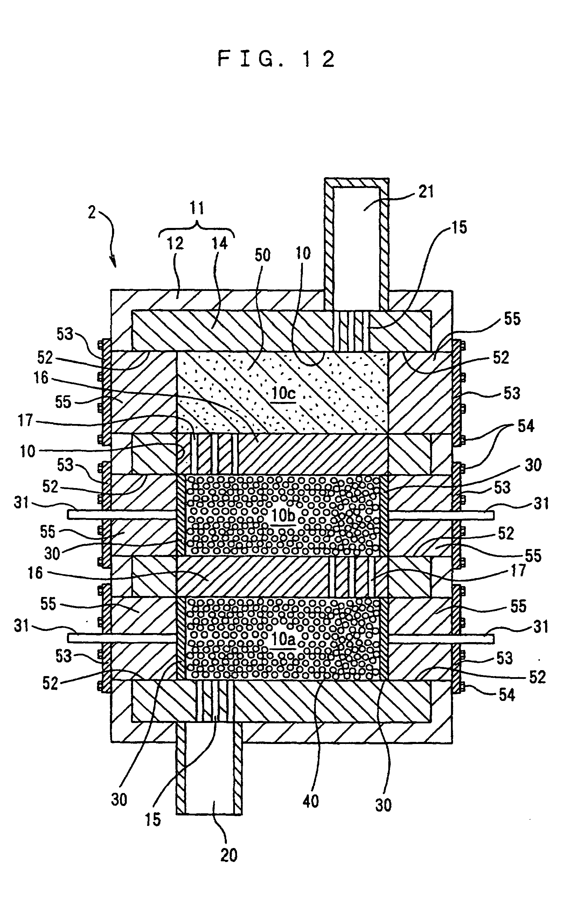

FIG. 11 is a perspective view of a thermal decomposition furnace 2 for exhaust gas as the second embodiment. FIG. 12 is a horizontal cross-sectional view of the furnace 2. In FIGS. 11 and 12, the same reference numeral as that used in FIGS. 1-5 is used to denote the same element as, or a one corresponding to, that of the first embodiment.

Further explanation of an element of the second embodiment similar to that of the waste gas decomposition furnace 1 of the first embodiment will be omitted, and only elements of the second embodiment different from those of the first embodiment will be explained next.

The exhaust gas thermal decomposition furnace 2, including an internal heating chamber 10, has an inlet port 20 on its front for introducing the exhaust gas into the heating chamber 10, and an outlet port 21 on its rear for discharging the thermally decomposed exhaust gases out of the heating chamber 10.

The furnace 2 has an outer wall 11 which has a doubled structure similar to that of the first embodiment. The space surrounded by the innermost firebrick layer 14 forms the heating chamber 10. The inlet and the outlet ports 20 and 21 fluid communicate with the heating chamber 10 through corresponding holes 15 provided in the upper and lower firebrick layer 14 such that the exhaust gas flows from the inlet port 20 to the outlet port 21.

The heating chamber 10 is divided by a plurality of (2 in FIG. 12) partitions 16 into a plurality of (three in FIG. 12) subchambers 10a, 10b, 10c arranged in the direction of flow of the exhaust gas such that the foremost subchamber 10a fluid communicates with the inlet port 20 and the rearmost subchamber 10 fluid communicates with the outlet port 21.

The plurality of partitions 16 have a corresponding plurality of groups of through holes 17 provided in alternately right and left end portions thereof such that each group of through holes places its adjacent subchambers in fluid communication. In such arrangement, an exhaust gas path extends within the heating chamber 10 in a zigzag manner from the foremost subchamber 10a through a plurality of through holes 17, a central subchember 10b and a plurality of throguh holes 17 to a rearmost subchamber 10c. Thus, the exhaust gas introduced through inlet port 20 into the furnace passes through the respective subchambers 10a, 10b and 10c in a zigzag manner and then discharged out of the outlet port 21.

Apair of plate-like carbon electrodes 30 are each disposed on a respective one of the right and left sides of each of the subchambers 10a and 10b with a pair of carbon rods 31 each extending outward from a respective carbon electrode 30 through the corresponding outer wall 11.

The rearmost subchamber 10c is filled with a fiber-like active carbon filter 50 whereas each of the subchambers 10a and 10b is filled with light emitting heaters 40 as in the first embodiment.

The size and shape of the through holes 15 and 17 provided in the firebrick layers 14 and the partitions 16 are not especially limited as long as they prevent the light emitting heaters 40 from passing therethrough. When the light emitting heaters 40 each take the form of a sphere, the through holes 15 and 17 preferably take the form of a triangle in transverse section. The through holes 15 and 17 may take the form of a horizontal or vertical slit in transverse section. For example, each slit-like hole 17 may be formed by arranging ceramic pillars in parallel instead of using the partitions 16 with a plurality of through holes 17. In this case, the opening areas of the through holes 15 and 17 increase and hence are preferable when a large amount of exhaust gas flows through the holes.

Inspection openings 60 are provided on an upper surface of the furnace 2 to enable the degree of a deterioration in each of the light emitting heaters 40 and firebrick layers 14 to be inspected, and to enable the old light emitting heaters 40 to be replaced with new ones.

A method of thermally decomposing harmful substances contained in the exhaust gas will be next described, using the thermal decomposition furnace 2. A required voltage is applied across the respective pairs of carbon electrodes 30 to produce electric discharges among the light emitting heaters 40. In this case, the pairs of carbon electrodes 30 are connected in series to a power supply (not shown). Although they may be connected in parallel, the series connection produces a higher discharge efficiency to thereby provide a higher temperature, which is therefore more preferable.

When a chimney of an incinerator (not shown) is connected to the inlet port 20 in fluid communication, the exhaust gas produced by the incinerator is introduced into the heating chamber 10. Since the blower 51 draws the exhaust gas in the heating chamber 10, the exhaust gas neither flows in the reverse direction nor stays within the heating chamber 10. When the exhaust gas is introduced into the heating chamber 10, no oxygen is present within the heating chamber 10 and the light emitting heaters 40 filled with the heating chamber 10 are placed in an oxygenless state.

Since the introduced exhaust gas comes into contact with the electric discharges at about 3000 °C produced among the light emitting heaters 40 to be heated to that temperature, harmful substances such as soot dust, carbon dioxide, chlorine compounds, nitrogen compounds and dioxin contained in the exhaust gas are thermally decomposed without being burnt to become harmless gases.

As in the first embodiment, the positions of the inlet port 20, outlet port 21, inspection openings 60 and blower 51 in the furnace 2 are not limited to the present embodiment as long as the object of the present invention is achieved.

When the incinerator discharges a large amount of exhaust gas, a plurality of thermal decomposition furnaces 2 may be attached to the incinerator as in the first embodiment.

The form of the path for the exhaust gas may be freely designable and the number of subchambers and the quantity of the light emitting heaters 40 may be adjusted, depending on the kinds and concentrations of harmful substances contained in the exhaust gas and the quantity of the exhaust gas to be decomposed. While in the present embodiment the flow path is illustrated as extending horizontally, it may extend vertically.

### (Third Embodiment)

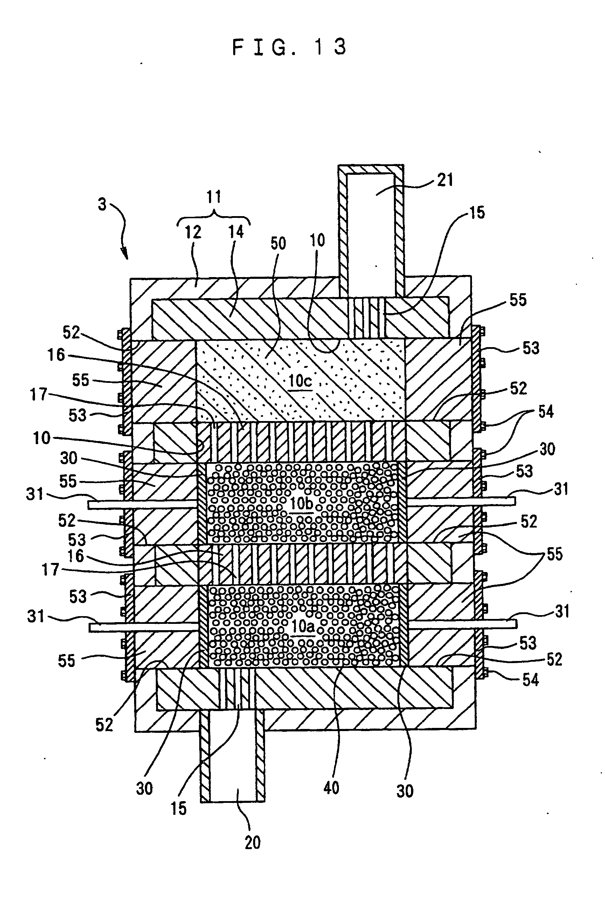

FIG. 13 is a horizontal cross-sectional view of an exhaust gas thermal decomposition furnace 3 of a third embodiment, which is similar in appearance to the decomposition furnace 2 of the second embodiment and will be described next with reference to FIG. 11. The same reference numeral in FIG. 13 as that used in FIGS. 1-12 is used to denote the same or similar element of the third embodiment as or to that of the first and second embodiments.

The furnace 3 of the third embodiment is substantially the same as the furnace 2 of the second embodiment except for the internal composition of the heating chamber 10 thereof. Thus, further explanation of the structural portions of the furnace 3 similar to those of the furnace 2 will be omitted and only other different structural portions thereof will be explained below.

The heating chamber 10 is separated by a plurality (2 in FIG. 13) partitions 16 of a heat-resisting firebrick into a plurality of (3 in FIG. 13) subchambers 10a, 10b and 10c arranged longitudinally in the furnace 3. An inlet port 20 fluid communicates with the foremost subchamber 10a while an outlet port 21 fluid communicates with the rearmost subchamber 10c.

Each partition 16 has a plurality of through holes 17 uniformly distributed thereon to thereby place its adjacent subchambers in fluid communication. In such arrangement, straightforward exhaust gas flow paths are formed within the heating chamber 10 such that the exhaust gas entering the inlet port 20 passes straightforward from the foremost subchamber 10a, through the plurality of through holes 17, the central subchamber 10b, the second plurality of through holes 17 to the rearmost subchamber 10c and thence discharged out of the outlet port 21. Since the plurality of through holes 17 are provided uniformly in substantially the whole partitions 16 to thereby increase a flow of the exhaust gas.

A method of thermally decomposing the harmful substances contained in the exhaust gas, using the furnace 3 in this embodiment, is similar to that used in the second embodiment except that the exhaust gas passes substantially straightforward through the heating chamber 10, and further description thereof will be omitted.

As in the first embodiment, the positions of the inlet port 20, outlet port 21, inspection openings 60 and blower 51 in the furnace 3 are not limited to the present embodiment as long as the object of the present invention is achieved.

When the incinerator discharges a large amount of exhaust gas, a plurality of thermal decomposition furnaces 3 may be attached to the incinerator as in the first embodiment.

The form of the path (straightforward or zigzag) for the exhaust gas may be freely designable and the number of subchambers filled with a plurality of light emitting heaters and the quantity of the light emitting heaters 40 may be adjusted, depending on the kinds and concentrations of harmful substances contained in the exhaust gas and the quantity of the exhaust gas to be decomposed. While in the present embodiment the flow path is illustrated as extending horizontally, it may extend vertically.

### (Fourth Embodiment)

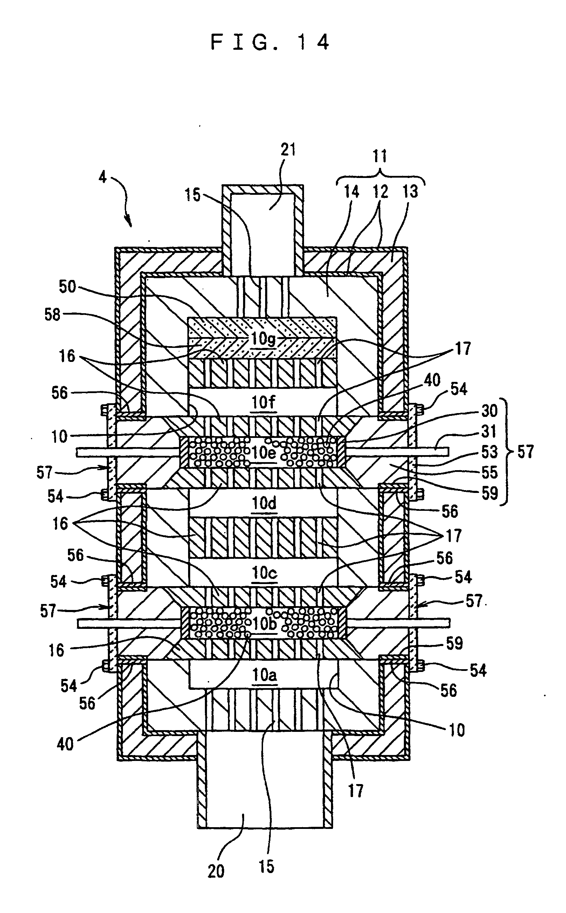

FIG. 14 is a horizontal cross-sectional view of an exhaust gas thermal decomposition furnace 4 of a fourth embodiment. The same reference numeral as that used in FIGS. 1-12 is used in FIG. 13 to denote the same or similar element of the fourth embodiment as or to that of the first-third embodiments.

The furnace 4 of the fourth embodiment is substantially the same as the furnace 3 of the third embodiment except for the composition of the outer wall 11, pairs of carbon electrodes 30, and openings 52 thereof. Thus, further explanation of the structural portions of the furnace 4 similar to those of the furnace 3 will be omitted and only other different structural portions of the furnace 4 will be explained below.

The furnace 4 has an outer wall 11 of a 4-layered structure which includes the innermost heat-resisting firebrick layer 14, an inner iron plate layer 12, an outer refractory concrete layer 13, and the outermost iron plate layer 12 coated with a heat resisting coating.

The heating chamber 10 is separated by a plurality (6 in FIG. 14) partitions 16 of a heat-resisting firebrick into a plurality of (7 in FIG. 14) subchambers 10a-10g arranged longitudinally in the furnace 4. An inlet port 20 fluid communicates with the foremost subchamber 10a while an outlet port 21 fluid communicates with the rearmost subchamber 10g.

Each partition 16 has a plurality of through holes 17 uniformly distributed thereon to thereby place its adjacent subchambers in fluid communication. In such arrangement, straightforward exhaust gas flow paths are formed within the heating chamber 10 such that the exhaust gas entering the inlet port 20 passes straightforward from the foremost subchamber 10a, through the plurality of through holes 17, the subchamber 10b, the second plurality of through holes 17; ..., to the rearmost subchamber 10g and then discharged out of the outlet port 21.

A pair of plate-like carbon electrodes 30 are each disposed on a respective one of right and left sides of each of any selected ones of the subchambers (the second and fifth chambers 10b and 10e from the front in FIG. 14) except for the rearmost subchamber 10g. Each electrode 30 has a carbon rod 31 which extends outwards through the outer wall 11 of the furnace 4.

The rearmost subchamber 10d is filled with a fiber-like active carbon filter 50 and a Japanese Bincho carbon layer 58 to adsorb hydrocarbon and heavy metals. Each subchamber with a pair of carbon electrodes 30 is filled with light emitting heaters 40 as in the first embodiment. The fiber-like active carbon filter 50 may be replaced with a particulate active carbon filter.

As described above, in the first-third embodiments, each opening 52 is covered with a corresponding iron cover 53, and a refractory concrete block 55 is filled between the iron cover 53 and a corresponding carbon electrode 30. The cover 53, refractory concrete block 55, and the combination of the electrode 30 and carbon rod 31 each are of an independently removable type.

In the present embodiment the four members, i.e., cover 53, refractory concrete block 55, carbon electrode 30 and carbon rod 31 form an united electrode unit 57 where the cover 53 is made of ceramic or may be an iron plate coated with an insulator. Thus, the cover 53, refractory concrete 55 layer, electrode 30 and carbon rod 31 are not required to be removed individually to replace the carbon electrode 30 with a new one. Instead, the electrode unit 57 is only required to be replaced wholly with another one to thereby facilitate replacing the carbon electrode 30 with a corresponding new one.

An outer rectangular iron frame 56 is provided so as to fit fixedly into an inner edge of each opening 52. A corresponding inner rectangular iron frame 59 is received within the corresponding rectangular iron cylindrical frame 56 and fits fixedly over a corresponding end portion of the refractory concrete block 13 for covering purposes such that the iron frame 59 slides along with the electrode unit 57 relative to the frame 56 to move the electrode unit 57 into/out of the opening 52.

Each carbon electrode 30 fails to extend into the heating chamber 10, but ends in a wall of the heating chamber 10. Thus, the carbon electrode 30 is difficult to deteriorate with harmful substances contained in the exhaust gas and/or at a temperature.

A method of thermally decomposing the harmful substances contained in the exhaust gas, using the furnace 4 in this embodiment, is similar to that used in the second embodiment except that the exhaust gas passes substantially straightforward through the heating chamber 10, and further description thereof will be omitted.

When the incinerator discharges a large amount of exhaust gas, a plurality of thermal decomposition furnaces 4 may be attached to the incinerator as in the first embodiment.

The form of the path (straightforward or zigzag) for the exhaust gas may be freely designable and the number of subchambers each filled with a plurality of light emitting heaters and the quantity of light emitting heaters may be adjusted, depending on the kinds and concentrations of the harmful substances contained in the exhaust gas and the quantity of the exhaust gas to be decomposed. While in the present embodiment the flow path is illustrated as extending horizontally, it may extend vertically.

A method of making the spherical light emitting heaters 40 of graphite used in the first-fourth embodiments and their physical properties will be described in detail next.

### (Example 1)

A filler of phenol resin or polydivinyl benzene resin was mixed with acrylic fibers, animal or plant fibers having a length of 0.1-0.5 mm. The mixture was then filled into a mold, sufficient pressure and heat were applied to the mixture for hardening purposes to form spheres, hemispheres, rectangular parallelepipeds or cylinders. In the case of hemispheres, two hemispheres were united to form a sphere. The moldings were then heated to 250-300 °C for flame resistance under an inert gas, and then carbonized at 1000-1500 °C. They were then graphitized at 2000-3000 °C, and sized for surface treatment.

In the carbonizing and graphtizing processes, a pressure of not less than 300 kg/cm² was applied isotopically to the moldings in hot isostatic pressing (HIP) while repeating burning the moldings under the inert gas to increase the density of their graphite. In HIP, pressure can be applied isotropically to even spheres. General graphite and carbon substances each have many pores whose total area is generally about 25 % of the whole surface thereof. However, the whole area of the pores present in the surface of graphite was reduced to not more than 10 % of the whole surface area thereof, and according to circumstances, to not more than 5 %, in the above process.

The use of resin as the filler produced graphite whose pores were relatively small in number. By burning the moldings under pressure, graphite of impermeability was obtained with high accuracy. Such graphite exhibited corrosion resistance to almost all chemicals in a wide practical range of temperatures. Such graphite had very high heat conductivity, and high thermal stability such that it was not adversely affected by a rapid change in its temperature compared to general materials having corrosion resistance.

When the impermeability graphite took a rectangular parallelepiped or cylinder, it was ground to spheres for use as light emitting heaters.

The light emitting heaters were made of impermeability graphite, so that they had a gas absorptivity of not higher than that of rubber, a strength of 2-3 times that of general graphite, a hardness of not less than 65 (in this example, 68), and a density of not less than 1.87 g/cm³ (adjustable depending on a mixture ratio of fibers). They further had a tensile strength of 170 kg/cm², a bending strength of 360 kg/cm², a compressive strength of 1000 kg/cm², a modules of elasticity of not less than 1300 kg/mm², a coefficient of thermal expansion of 3.0 × 10⁻⁶/°C, a heat conductivity of 130 Kcal/m•h•°C, and a thermal resistance of 3000 °C. They exhibited an excellent corrosion resistance to chemicals having strong acidity such as a concentrated sulfuric acid or a nitric acid, and chemicals having strong alkalinity such as a solution of sodium hydroxide. When the graphite was made from a phenol resin, its resistance to alkalinity was somewhat reduced. Results of tests in corrosion resistance will be shown collectively in Tables 1-3 below. In the respective Tables, the term "all" described in a concentration item represents "all concentration".

Since the light emitting heaters were each made of impermeability graphite, as described above, they had the following excellent properties:
(1) They were difficult to deteriorate with harmful substances contained in the exhaust gas;
(2) They were difficult to react with oxygen contained in the exhaust gas or oxygen produced by decomposition of the exhaust gas, and difficult to deteriorate. They seldom produced carbon monoxide or dioxide;
(3) They had high strength, were hardly worn away, and had excellent durability; and
(4) They had only a few pores and were difficult to adsorb harmful substances in the pores. They adsorbed little gas and rarely produced adsorbed gas at high temperature.

**(Table 1)**

| Chemicals' name | Concentration (% by weight) | Temperature (°C) | Corrosion¹⁾ resistance |
|---|---|---|---|
| [acid] | | | |
| hydrochloric acid | All | boiling point | A |
| nitric acid | 10∼40 | 60 | B |
| hydrofluoric acid | 48 | boiling point | A |
| hydrofluoric acid | 48∼60 | 90 | A |
| sulfuric acid | 25∼75 | 130 | A |
| phosphoric acid | 85 | boiling point | A |
| phosphoric acid | 96 | 100 | A |
| chromic acid | 10 | 93 | B |
| acetic acid | All | boiling point | A |
| oxalic acid | All | boiling point | A |
| sulfurous acid (sulfurous acid gas saturated) | - | room temp. | A |
| hydrochloric acid (chlorine gas saturated) | 20 | boiling point | A |
| hydrofluoric acid + nitric acid | 5/15 | 93 | A |

| | | | |
|---|---|---|---|
| 1) A: not at all corroded, and B: hardly corroded. | | | |

**(Table 2)**

| Chemicals' name | Concentration (% by weight) | Temperature (°C) | Corrosion¹⁾ resistance |
|---|---|---|---|
| [alkali] | | | |
| rayon spinning solution | - | boiling point | A |
| caustic soda aqueous solution | 67 | boiling point | A |
| caustic soda aqueous solution | 67~80 | 125 | A |

| [salt aqueous solution] | | | |
|---|---|---|---|
| zinc chloride | All | boiling point | A |
| iron chloride | All | 100 | A |
| sodium chloride | All | boiling point | A |
| sodium hypochloride | 5 | room temp. | A |
| ammonium persulfate | All | 18 | A |
| copper sulfate | All | boiling point | A |

| [halogen] | | | |
|---|---|---|---|
| chlorine | 100 | 170 | A |
| chlorine water | Saturated | room temp. | A |

| | | | |
|---|---|---|---|
| 1) A: not at all corroded B: hardly corroded | | | |

**(Table 3)**

| Chemicals' name | Concentration (% by weight) | Temperature (°C) | Corrosion¹⁾ resistance |
|---|---|---|---|
| [organic compound] | | | |
| acetone | 100 | boiling point | A |
| ethyl alcohol | 95 | boiling point | A |
| carbone tetrachloride | 100 | boiling point | A |
| ethane tetrachloride | 100 | boiling point | A |
| chloroform | 100 | boiling point | A |
| kerosine | 100 | boiling point | A |
| Dowtherm²⁾ | 100 | 170 | A |
| benzene | 100 | boiling point | A |
| benzene (saturated with chlorine) | | 60 | |
| benzyl chloride | 100 | 170 | A |
| methyl alcohol | 100 | boiling point | A |
| monochlorobenzene | 100 | boiling point | A |

| | | | |
|---|---|---|---|
| 1) A: not at all corroded, and B: hardly corroded | | | |
| 2) Heat medium manufactured by the Dow Chemical Co. | | | |

### (Example 2)

A filler of phenol resin or polydivinyl benzene resin was next mixed with at least one of tungsten powder of a purity of not less than 99.9 % having an average grain size of about 1.0 *µ*m and titanium powder of a purity of not less than 99.9 % having an average grain size of about 1.0 µm.

This mixture may be further mixed with acrylic, animal or plant fibers identical to those used in Example 1, and/or carbon black powder, coke or Japanese Bincho charcoal powder excellent in electric conductivity.

By processing this mixture in a manner similar to that used in Example 1, light emitting heaters each comprising a graphite sphere of high density and having only a few pores were obtained. It is to be noted that unlike Example 1 the light emitting heaters contained at least one of tungsten and titanium and that in the last step of the graphitization they were subjected to heat treatment at about 3000 °C under an inert gas.

Tungsten was changed by heat treatment at about 3000 °C to ditungsten monocarbide (W₂C) having a formula weight of 379.71, a density of 17.2 g/cm³, a Mohs' hardness of 9, and an electric resistibility of 81 *µ* Ω /cm (25 °C)). Titanium was changed to titanium carbide (TiC) having a formula weight of 59.90, a melting point of 3140 ± 90 °C, a boiling point of 4300 °C, a density of 4.94 g/cm³, and an electric resistibility of 193 *µ* Ω /cm (at room temperature)). When ditungsten monocarbide was heated at a temperature of not less than 2400 °C, it was crystallized to a stable β type crystal system.

Titanium has a melting point of 1675 °C, a boiling point of 3262 °C, and a density of 4.54 g/cm³. Titanium carbide had greatly increased melting and boiling points, and also a high density. It is to be noted that tungsten has a melting point of 3387 °C and a melting point of 5962 °C.

The light emitting heaters of impermeability graphite containing ditungsten monocarbide and/or titanium carbide had features identical to the features (1)-(4) described in Example 1 as well as corrosion resistance, mechanical strength (high hardness, and a modulus of elasticity of 31600-44800 Kg/mm²), and heat resistance (resisting a temperature of not less than 3000 °C) excellent compared to the ditungsten monocarbide- and/or titanium carbide-free light emitting heaters of Example 1. It also had an excellent electric conductivity (its electric resistibility is not more than 70 *µ* Ω /cm. In this example, 10 *µ* Ω/cm) and a high discharge efficiency.

The heat treatment at about 3000 °C under the inert gas produced the following advantages:
a) After the heat treatment, the light emitting heaters were not required to be subjected to a finishing process or step such as bright heat treatment (for polishing or finishing the light emitting heaters);
b) The light emitting heaters are hardly deformed in use;
c) It does not cause harm to the public.

### (Example 3)

A phenol resin or polydivinyl benzene resin as a binder was mixed with carbon black powder, coke or Japanse Bincho charcoal powder excellent in electric conductivity as a filler. The mixture may further be mixed with at least one of tungsten and titanium powder. By processing this mixture in a manner similar to that in which the mixture in Example 2 was processed, light emitting heaters each in the form of a graphite sphere each having high density and only a few pores were obtained.

The light emitting heaters had excellent characteristics similar to those of Example 2.

### INDUSTRIAL APPLICABILITY

The present invention provides an inexpensive thermal decomposition furnace for exhaust gas which is attached to equipment or facilities comprising an incinerator which discharges exhaust gas or smoke containing harmful substances to thermally decompose the harmful substances to make them harmless.

## Claims

1. A thermal decomposition furnace (1; 2; 3; 4) for exhaust gas containing harmful substances, the fumace (1; 2; 3; 4) comprising:
a heating chamber (10) for heating the exhaust gas;
an inlet port (20) for introducing the exhaust gas into said heating chamber (10);
at least one pair of electrodes (30) provided within said heating chamber (10);
a plurality of light emitting heaters (40) which contain carbon as a main ingredient, the plurality of light emitting heaters (40) being provided between said at least one pair of electrodes (30) so as to produce an electric discharge when a voltage is applied across said at least one pair of electrodes (30); and
an outlet port (21) for discharging thermally decomposed exhaust gas out of said heating chamber (10), and **characterized in that**
said plurality of light emitting heaters (40) have impermeability and are placed in an oxygenless state.

2. A thermal decomposition furnace according to claim 1, wherein said plurality of light emitting heaters (40) are placed in a vacuum state.

3. The thermal decomposition furnace (1; 2; 3; 4) according to claim 1 or 2, comprising a fluid path provided within said heating chamber (10) and extending between said inlet port (20) and said outlet port (21) for allowing the exhaust gas to path therethrough, and wherein said plurality of light emitting heaters (40) are provided in at least a part of said fluid path.

4. The thermal decomposition fumace (1; 2; 3; 4) according to claim 1 or 2, comprising a heat resisting pipe (22) provided within said heating chamber (10) so as to extend between said inlet port (20) and said outlet port (21) for allowing the exhaust gas to pass therethrough, and wherein said plurality of light emitting heaters (40) surround at least a part of said heat resisting pipe (22).

5. The thermal decomposition furnace(1; 2; 3; 4) according to claim 4, wherein said heat resisting pipe (22) is composed of a material whose main ingredient is carbon.

6. The thermal decomposition furnace(1; 2; 3; 4) according to any one of claims 1 to 4, wherein said plurality of light emitting heaters (40) are each composed of at least one of charcoal and graphite.

7. The thermal decomposition furnace (1; 2; 3; 4) according to any one claims 1 to 4 and 6 wherein said plurality of light emitting heaters (40) each take the form of a sphere.

8. The thermal decomposition furnace (1; 2; 3; 4) according to any one of claims 1 to 7, further comprising a filter(50) made of at least one of active carbon and charcoal for allowing the thermally decomposed exhaust gas to pass therethrough.

## Patentansprüche

1. Thermolyseofen (1; 2; 3; 4) für ein schädliche Substanzen enthalten- des Abgas, wobei der Ofen (1; 2; 3; 4) umfasst:
eine Heizkammer (10) zum Erhitzen des Abgases;
einen Einlassanschluss (20) zum Einleiten des Abgases in die Heizkammer (10);
wenigstens ein Paar Elektroden (30), die in der Heizkammer (10) vorgesehen sind;
mehrere lichtemittierende Heizeinrichtungen (40), die als Hauptbestandteil Kohlenstoff enthalten, wobei die mehreren lichtemittierenden Heizeinrichtungen (40) zwischen dem wenigstens einen Paar Elektroden (30) vorgesehen sind, um eine elektrische Entladung hervorzurufen, wenn an das wenigstens eine Paar Elektroden (30) eine Spannung angelegt wird; und
einen Auslassanschluss (21) zum Entleeren thermisch zersetzten Abgases aus der Heizkammer (10) und
**dadurch gekennzeichnet, dass**
die mehreren lichtemittierenden Heizeinrichtungen (40) impermeabel sind und in einem sauerstofffreien Zustand angeordnet sind.

2. Thermolyseofen nach Anspruch 1, bei dem die mehreren lichtemittierenden Heizeinrichtungen (40) in einem Vakuumzustand angeordnet sind.

3. Thermolyseofen (1; 2; 3; 4) nach Anspruch 1 oder 2, der einen Fluidweg umfasst, der in der Heizkammer (10) vorgesehen ist und sich zwischen dem Einlassanschluss (20) und dem Auslassanschluss (21) erstreckt, damit sich das Abgas hindurch bewegen kann, wobei die mehreren lichtemittierenden Heizeinrichtungen (40) wenigstens in einem Teil des Fluidwegs vorgesehen sind.

4. Thermolyseofen (1; 2; 3; 4) nach Anspruch 1 oder 2, der ein hitzebeständiges Rohr (22) umfasst, das in der Heizkammer (10) so vorgesehen ist, dass es sich zwischen dem Einlassanschluss (20) und dem Auslassanschluss (21) erstreckt, damit sich das Abgas hindurchbewegen kann, wobei die mehreren lichtemittierenden Heizeinrichtungen (40) wenigstens einen Teil des hitzebeständigen Rohrs (22) umgeben.

5. Thermolyseofen (1; 2; 3; 4) nach Anspruch 4, bei dem das hitzebeständige Rohr (22) aus einem Werkstoff gebildet ist, dessen Hauptbestandteil Kohlenstoff ist.

6. Thermolyseofen (1; 2; 3; 4) nach einem der Ansprüche 1 bis 4, bei dem die mehreren lichtemittierenden Heizeinrichtungen (40) jeweils aus Holzkohle und/oder Graphit gebildet sind.

7. Thermolyseofen (1; 2; 3; 4) nach einem der Ansprüche 1 bis 4 und 6, bei dem die mehreren lichtemittierenden Heizeinrichtungen (40) jeweils kugelförmig sind.

8. Thermolyseofen (1; 2; 3; 4) nach einem der Ansprüche 1 bis 7, der ferner ein Filter (50) umfasst, das aus Aktivkohle und/oder Holzkohle hergestellt ist, damit sich das thermisch zersetzte Abgas hindurchbewegen kann.

## Revendications

1. Four de décomposition thermique (1, 2, 3, 4) pour gaz d'émission contenant des substances nocives, le four (1, 2, 3, 4) comprenant :
- une chambre de chauffage (10) pour chauffer le gaz d'émission ;
- un orifice d'admission (20) pour introduire le gaz d'émission dans ladite chambre de chauffage (10) ;
- au moins une paire d'électrodes (30) disposée dans ladite chambre de chauffage (10) ;
- une pluralité de dispositifs de chauffage (40) à émission de lumière qui contiennent du carbone comme constituant principal, la pluralité de dispositifs de chauffage (40) à émission de lumière étant disposée entre au moins une dite paire d'électrodes (30) de façon à produire une décharge électrique quand on applique une tension entre au moins ladite paire d'électrodes ; et
- un orifice d'échappement (21) pour évacuer le gaz d'émission thermiquement décomposé hors de ladite chambre de chauffage (10),
**caractérisé en ce que** les dispositifs de chauffage (40) à émission de lumière de ladite pluralité sont imperméables et sont placés dans un milieu dépourvu d'oxygène.

2. Four de décomposition thermique selon la revendication 1, **caractérisé en ce que** les dispositifs de chauffage (40) à émission de lumière de ladite pluralité sont placés dans le vide.

3. Four de décomposition thermique (1, 2, 3, 4) selon la revendication 1 ou 2, comprenant un circuit de fluide prévu à l'intérieur de ladite chambre de chauffage (10) et s'étendant entre ledit orifice d'admission (20) et ledit orifice d'échappement (21) pour permettre aux gaz d'émission d'y circuler, et dans lequel les dispositifs de chauffage (40) à émission de lumière de ladite pluralité sont prévus dans au moins une partie dudit circuit de fluide.

4. Four de décomposition thermique (1, 2, 3, 4) selon la revendication 1 ou 2, comprenant un conduit (22) résistant à la chaleur prévu à l'intérieur de ladite chambre de chauffage (10) de façon à s'étendre entre ledit orifice d'admission (20) et ledit orifice d'échappement (21) pour permettre aux gaz d'émission d'y circuler et dans lequel les dispositifs de chauffage (40) à émission de lumière de ladite pluralité entourent au moins une partie dudit conduit (22) résistant à la chaleur.

5. Four de décomposition thermique (1, 2, 3, 4) selon la revendication 4, **caractérisé en ce que** le conduit (22) résistant à la chaleur est composé d'un matériau dont le principal constituant est le carbone.

6. Four de décomposition thermique (1, 2, 3, 4) selon une quelconque des revendications 1 à 4, **caractérisé en ce que** chaque dispositif de chauffage (40) à émission de lumière de ladite pluralité est fait d'au moins un composant choisi parmi le charbon de bois et le graphite.

7. Four de décomposition thermique (1, 2, 3, 4) selon une quelconque des revendications 1 à 4 et 6, **caractérisé en ce que** chaque dispositif de chauffage (40) à émission de lumière de ladite pluralité a la forme d'une sphère.

8. Four de décomposition thermique (1, 2, 3, 4) selon une quelconque des revendications 1 à 7, comprenant en outre un filtre (50) fait d'au moins un composant choisi parmi le charbon actif et le charbon de bois pour permettre aux gaz d'émission thermiquement décomposés d'y circuler.
